# EUROPEAN PATENT APPLICATION

(11) **EP 3 117 948 A1**
(43) Date of publication of application: **18.01.2017**
(21) Application number: 16179536.4
(22) Date of filing: 14.07.2016
(51) Int. Cl.: B23K 26/046, G02B 7/09

(54) **OPTIC HEATING COMPENSATION IN A LASER PROCESSING SYSTEM**

(30) Priority: 15.07.2015 US 201562192910 P
(71) Applicant: Preco, Inc., Somerset, WI 54025 (US)
(72) Inventor: ROFFERS, Steven J., Hudson, WI Wisconsin 54016 (US); MITCHELL, Kevin, Minnesota, WI Wisconsin 54017 (US); BUCKLEW, James, Somerset, WI Wisconsin 54025 (US); MILLER, Daniel, Roberts, WI Wisconsin 54023 (US)
(74) Representative: Downing, Michael Philip

(57) **Abstract**

A laser beam (106) is applied to optics (108, 110, 112, 114, 116, 120, 122) to focus the laser beam into a focal point (130) substantially on a piece of working material (124). An expected shift in a focal plane due to heating of the optics by the laser beam (106) is determined. At least one feature of the optics is altered based on the expected shift so as to maintain the focal point substantially on the piece of working material (124).

## Description

### BACKGROUND

In laser processing systems, a laser beam is used to heat an area on a piece of working material. This localized heating is used to bond pieces together, to mark pieces and/or to cut pieces, for example. The laser beam is focused and steered to a selected point on the working material using optics that include lenses and mirrors. In some laser processing systems, the working material is described as being in an x,y plane and the optics include a galvo having two rotatable mirrors that are used to steer the beam to different positions in the x,y plane. The beam is focused to a focal point by two or more lenses, where the focal point is the position along the beam where the beam has a minimum waist or cross section. The distance from the output of the galvo to the position of the focal point is referred to as the focal length.

If the position of the galvo is static, a fixed focal length causes the focal point to move along a spherical path as the galvo changes the x,y position of the beam. To see this, imagine a string that is as long as the focal length of the beam. If one end of the string is fixed to the output of the galvo, the other end of the string will follow a spherical path as it is moved in the x-y directions. This is undesirable because the working material is generally planar and moving the focal point along a spherical surface will cause the focal point to move out of the plane of the working material resulting in less efficient processing of the working material.

To overcome this, the art uses dynamic focusing in which different focal lengths are assigned to different x,y positions so that the focal points of all of the x,y positions are in a common plane, referred to as the focal plane.

The discussion above is merely provided for general background information and is not intended to be used as an aid in determining the scope of the claimed subject matter. The claimed subject matter is not limited to implementations that solve any or all disadvantages noted in the background.

### SUMMARY

A laser beam is applied to optics to focus the laser beam into a focal point substantially on a piece of working material. An expected shift in a focal plane due to heating of the optics by the laser beam is determined. At least one feature of the optics is altered based on the expected shift so as to maintain the focal point substantially on the piece of working material.

In a further embodiment, an apparatus includes a laser producing a laser beam during operation and an optics servo capable of moving at least one optical element that the laser beam is incident upon during operation. A controller causes the optics servo to move the at least one optical element to compensate for a change in a focal point due to heat generated by the laser beam during operation.

In a further embodiment, a controller for a laser-based manufacturing device is provided that includes storage electronics and control electronics. The storage electronics receive and store a power level of a laser beam. The control electronics use the stored power level of the laser beam to set a servo control signal such that when the servo control signal is provided to an optics servo the servo control signal causes the optics servo to move an optics element to compensate for a change in a focal point of the laser beam due to heating.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF DRAWINGS

FIG. 1 is a block diagram of a laser processing system.
FIG. 2 is a perspective view showing possible focal surfaces of a laser beam.
FIG. 3 is a graph of laser beam intensity as a function of a position along a line transverse to the laser beam.
FIG. 4 is a graph showing focal plane shift curves for a plurality of laser power levels.
FIG. 5 is a flow diagram of a method for identifying focal plane shift curves.
FIG. 6 is a block diagram of elements used in the method of FIG. 5.
FIG. 7 is a flow diagram of a method of controlling a focus servo to compensate for optic element heating by a laser.
FIG. 8 is a block diagram of elements used in the method of FIG. 7.
FIG. 9 provides a block diagram of a computing device.

### DETAILED DESCRIPTION

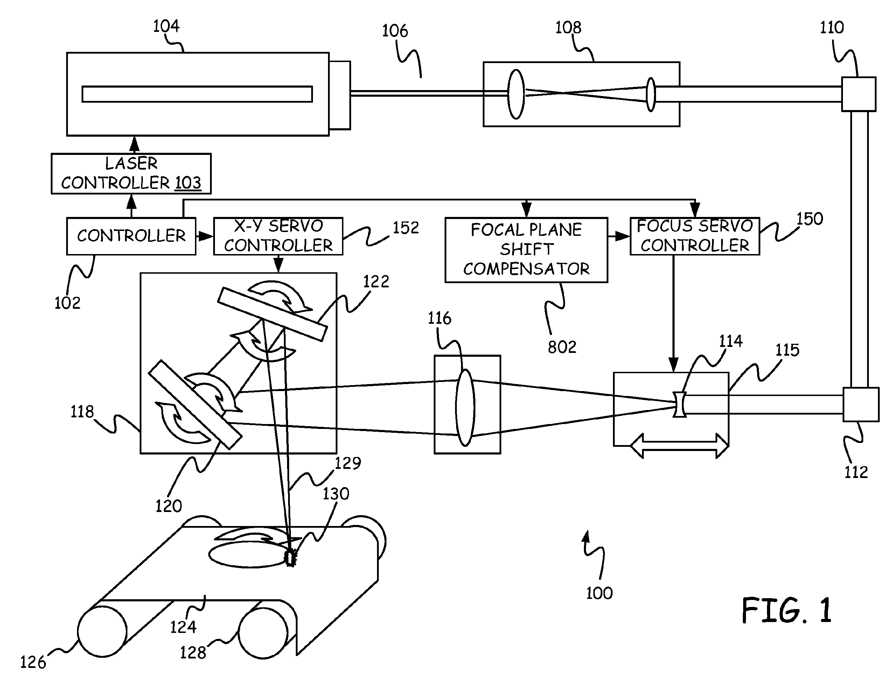

FIG. 1 is a block diagram of a laser processing system 100 in accordance with various embodiments. In laser processing system 100, a controller 102 sends a power level for a laser 104 to a laser controller 103. In response, laser controller 103 causes laser 104 to emit a laser beam 106 with the desired power level. Laser beam 106 is directed to a beam enhancement module 108, which includes collimation optics to expand and collimate the beam. This contributes to increased beam quality.

To ensure that the laser beam size, focal point size and laser beam intensity are adequate for a selected laser processing application, beam enhancement module 108 is in optical communication with optics. In laser processing system 100, the optics include two high-reflection mirrors 110 and 112 that are in optical communication with each other. The first mirror is in optical communication with beam enhancement module 108, while the second mirror is in optical communication with a servo-driven expansion lens 114. The servo-driven expansion lens 114 is in optical communication with a beam focusing lens or objective lens 116. Servo-driven expansion lens 114 and objective lens 116 together form focusing optics that are able to dynamically change the focal length of the laser beam. In particular, a focus servo controller 150 provides control signals to a focus servo 115, also referred to as an optics servo 115, to move expansion lens 114 relative to objective lens 116 to thereby alter the focal length of the laser beam. As discussed further below, focus servo controller 150 sets the control signal based on an x-y position for the beam provided by controller 102 and a focal plane shift compensator 802. In accordance with some embodiments, servo 115 is linear drive motor with a rotary actuator that moves lens 114 by closed loop control. The position of lens 114 is monitored during laser processing and focus servo controller 150 uses the position as feedback to accurately set the focal point so that all of the focal points remain in a single plane, referred to as a focal plane.

Objective lens 116 is in optical communication with a beam steering system, also referred to as a galvo 118 that includes a pair of servo-driven mirrors 120 and 122, which are movable to steer the beam in two separate dimensions. For convenience, the two dimensions are referred to as x,y. The servo-driven mirrors are moved by two respective servos in response to control signals produced by an x-y servo controller 152, which produces the control signals based on an x-y position for the beam provided by controller 102. The output of galvo 118 is a laser beam 129 that is focused on an x,y point 130 on working material 124. Working material 124 can be moved by one or more conveyors 126 and 128 and may include areas that are to be melted, bonded, marked and/or cut, for example, by beam 129.

Thus, in operation, laser 104 produces a laser beam 106 that is enhanced by beam enhancement module 108 and then reflected off mirrors 110 and 112 to servo-driven lens 114. Servo-driven lens 114 expands the beam provided by mirror 112 and the expanded beam is then narrowed by objective lens 116. The output beam from objective lens 116 reflects off servo-driven mirrors 120 and 122 so that it is focused at x-y point 130 on working material 124. By setting different x-y points, controller 102 is able to change the location of x-y point 130.

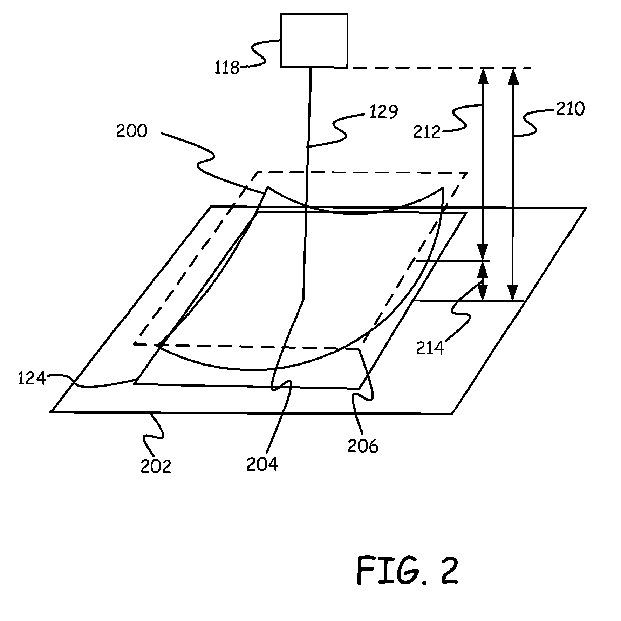

If servo-driven expansion lens 114 is maintained at a static position for all x-y positions of the laser beam, the focal point for the laser beam will follow a spherical surface as shown by spherical surface 200 of FIG. 2. In FIG. 2, the laser beam output by galvo 118 can be steered to any x-y position within the galvo's field of view defined by the exterior border of spherical surface 200. As shown in FIG. 2, working material 124 lies in an x-y plane 202. If the focal point is allowed to follow spherical surface 200 instead of remaining in x-y plane 202, the efficiency of the laser operations is impaired since the intensity of the laser beam will not be maximized at working material 124. To avoid this, the prior art has used focus servo controller 150 (FIG. 1) to dynamically adjust the position of servo-driven expansion lens 114 to alter the focal point based on the x-y position for the laser beam. Thus, as the beam is moved away from a center point 204, the focal length is increased by moving servo-driven expansion lens 114 toward objective lens 116. Thus, each x-y position for the beam has a respective servo-driven lens position. In other words, galvo 118 is able to direct the laser beam in two dimensions (x,y) and servo-driven lens 114 can be moved to different positions to change the position of the focal point of the laser beam in a third dimension (z), orthogonal to the x,y dimensions, wherein for different (x,y) positions for the laser beam, the servo-driven lens is moved to different positions so that the position of the focal point of the laser beam in the third dimension (z) is the same for all (x,y) positions.

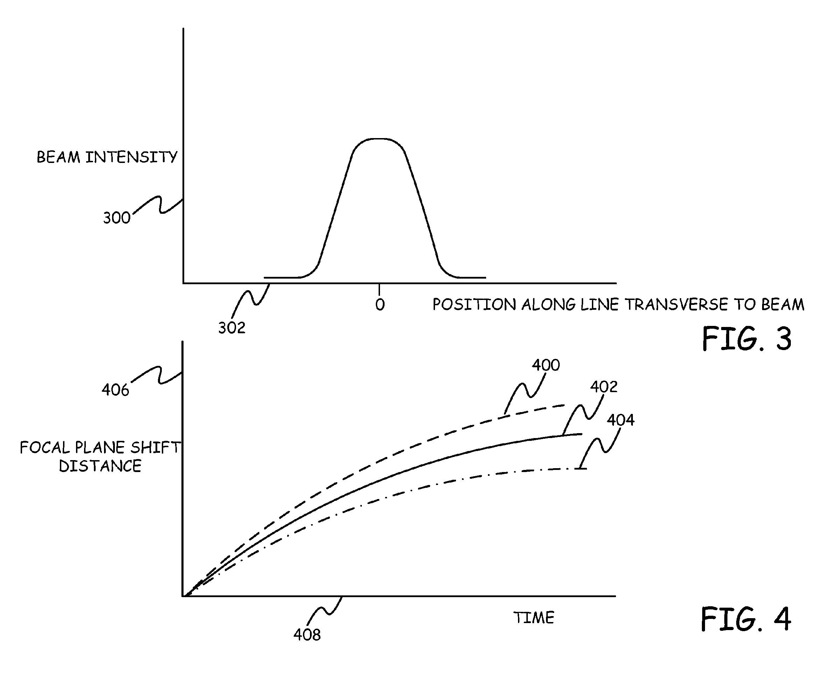

Laser beam 106 generated by laser 104 generally has a Gaussian distribution for its beam intensity. As shown in FIG. 3, where beam intensity is shown along vertical axis 300 and a position along a line that traverses the beam is shown along horizontal axis 302, the intensity of the laser beam is highest at the center point of the beam and decays in a Gaussian fashion away from the center of the beam. As a result, the laser beam heats the optics it passes through unevenly because more energy from the laser beam is absorbed at the center of the beam than at the periphery of the beam. Although coatings have been used to try to limit the absorption of the laser beam and thereby reduce the amount that the optics are heated, such coatings cannot prevent all heating of the optics.

The uneven heating of the optics changes the refractive characteristics of one or more of the optical elements, such as the lenses and mirrors, that the laser beam is incident upon between laser 104 and material 124. These changes cause a shift in the focal plane from plane 202 to focal plane 206 as shown in FIG. 2. The amount of the shift is shown as a shift distance 214, which is the difference between distance 210 from galvo 118 to plane 202 and distance 212 from galvo 118 to focal plane 206. Because of this shift in the focal plane, the laser processing once again becomes inefficient because the laser beam is no longer focused on working material 124, but instead, is focused above working material 124 in focal plane 206.

Because the focal plane shift is due to heating from the laser beam, the size of the focal plane shift is dependent on the time over which the laser beam has been applied to the optics and the power of the laser beam. FIG. 4 provides a graph of three curves 400, 402 and 404 for different laser power levels showing the amount of focal plane shift, shown along vertical axis 406, as a function of time, shown along horizontal axis 408. In general, higher laser power levels, such the power level for curve 400, produce greater focal plane shifts in a shorter amount of time than lower power levels, such as the power level for curve 404. For all of the curves, it can be seen that the focal plane shift changes non-linearly as a function of time.

Embodiments described below provide techniques for automatically compensating for focal plane shift due to laser-based optic heating. The technique includes two parts. In the first part, the curves shown in FIG. 4 are determined such that the focal plane shift resulting from a laser of a particular power level being applied for a particular time can be determined. Once the curves of FIG. 4 have been determined, the curves can be used to automatically adjust the focus of the laser beam using focus servo controller 150 of FIG. 1.

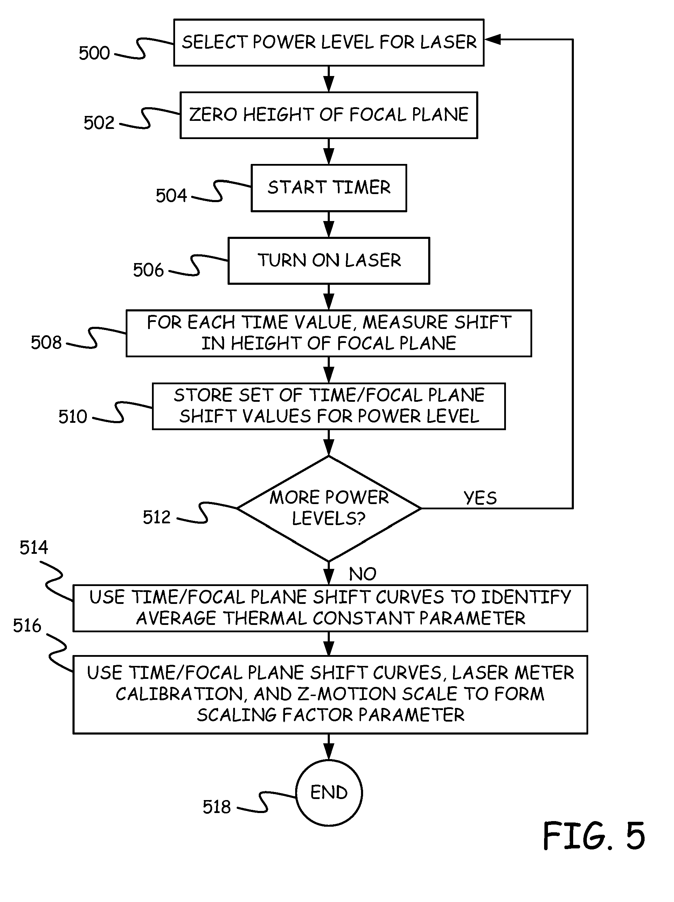

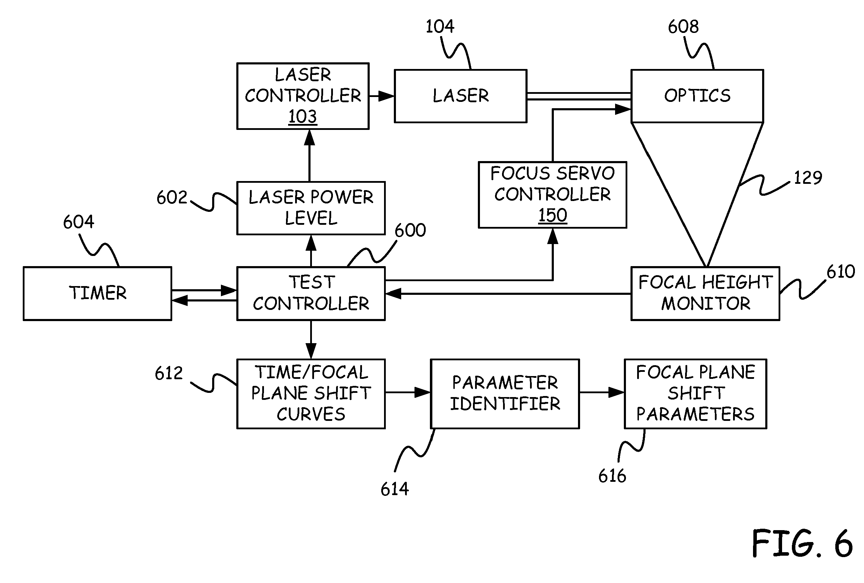

FIG. 5 provides a method of identifying the curves of FIG. 4 and using the curves to set focal plane shift parameters. FIG. 6 provides a block diagram of elements used in FIG. 5. At step 500 of FIG. 5, a test controller 600 of FIG. 6 selects a laser power level 602 for laser 104. At step 502, test controller 600 zeros the height of the focal plane produced by laser 104 and optics 608 using laser power level 602. Optics 608 include the optics shown in FIG. 1 such as beam enhancement module 108, mirrors 110 and 112, servo-driven enhancement lens 114, objective lens 116, and servo-driven mirrors 120 and 122. When zeroing the height of the focal plane at step 502, optics 608 direct laser beam 129 directly below galvo 118 so that a focal height monitor 610 can measure the width of the laser beam at a position associated with the desired position for the working material. When zeroing the height of the focal plane, test controller 600 instructs laser controller 103 to turn laser 104 on and instructs focus servo controller 150 to adjust optics 608 until focal height monitor 610 measures a minimum waist or cross section for the laser beam at the desired height for the focal plane. This minimum waist of the laser beam is considered to be the focal point of the laser beam. In accordance with some embodiments, laser controller 103 turns laser 104 on and off during step 502 to ensure that optics 608 are not heated while setting the zero height for the focal plane.

At step 504, test controller 600 starts a timer 604 and at step 506, laser controller 103 turns on laser 104 using laser power level 602. Timer 604 provides a series of time values to test controller 600, each separated by a time interval. At step 508, for each time value, focal height monitor 610 provides a focal plane shift value to test controller 600. Focal height monitor 610 determines the shift in the focal plane by measuring the waist of the laser beam at multiple vertical positions to determine the location of the waist minimum and thus the location of the focal plane. In accordance with other embodiments, focal height monitor 610 measures the waist of the laser beam at a single vertical position and uses an equation to convert the change in the size of the waist of the laser beam into a shift in the height of the focal plane.

At step 510, test controller 600 stores the set of time values and corresponding focal plane shift values for the power level selected at step 500 as time/focal plane shift curve 612. Time/focal plane shift curve 612 may be stored as a set of time values/focal plane shift values or may be stored as an equation that describes the focal plane shift values as a function of time.

At step 512, the process determines if there are more power levels to be considered. If there are more power levels, the process returns to step 500 and a new power level is selected. Steps 502-510 are then repeated. When there are no more power levels at step 512, the process of setting time/focal plane shift curves 612 is complete.

At step 514, a parameter identifier 614 uses time/focal plane shift curves 612 to identify an average thermal constant parameter. Each of the time/focal plane shift curves 612 has an associated thermal constant parameter that describes the shape of the curve. Parameter identifier 614 determines the thermal constant parameter for each curve and then averages those parameters to form the average thermal constant parameter, which is then stored in focal plane shift parameters 616.

At step 516, parameter identifier 614 uses time/focal plane shift curves 612, a laser meter calibration value, and a motion scale value to identify a scaling factor parameter. In particular, parameter identifier 614 uses time/focal plane shift curves 612 to identify a slope for each curve, where the slope is the ratio of a binary value representing the offset of the focal plane over a measure of the power of the laser. Parameter identifier 614 averages these slope values to form an average slope that is then multiplied by the laser meter calibration factor representing the ratio of actual laser power over measured laser power and by the motion scale value representing the ratio of an offset distance over a binary value representing the offset distance. The resulting product is the scaling factor parameter, which is also stored in focal plane shift parameters 616. At step 518, the process of FIG. 5 ends.

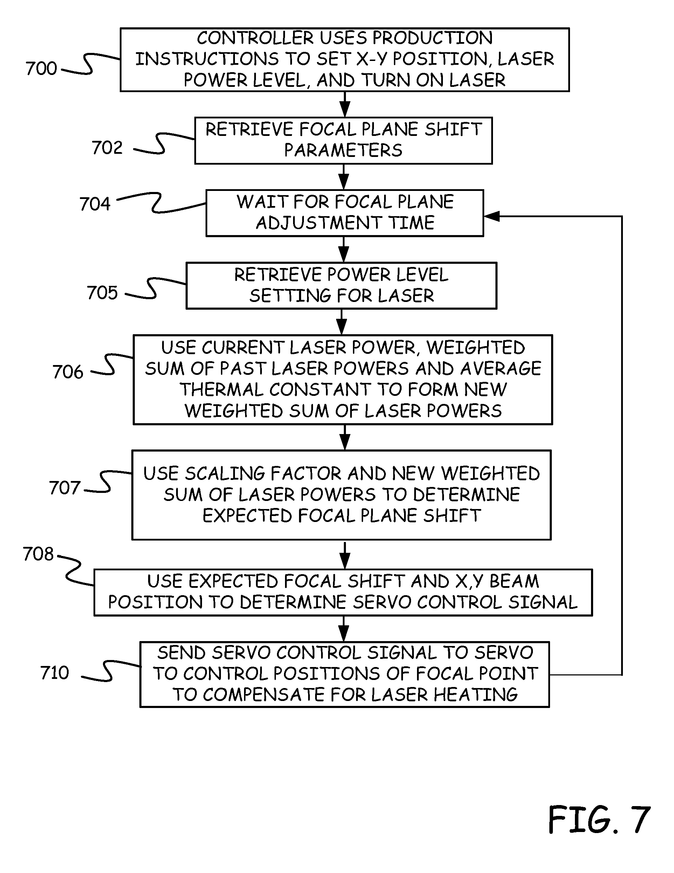

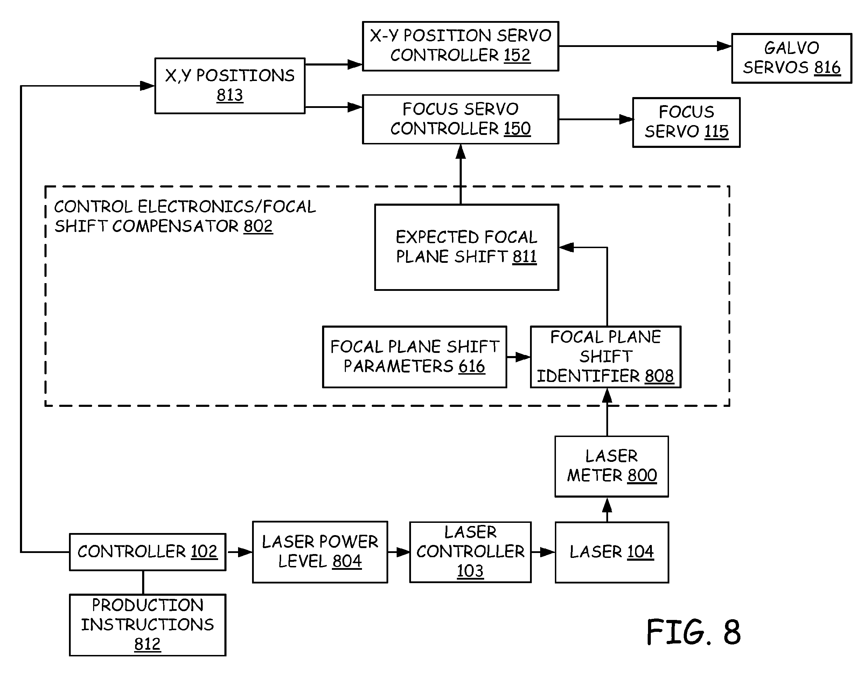

FIG. 7 provides a flow diagram of a method for using the time/focal plane shift curves 612 to automatically adjust the focal plane to compensate for focal plane shifts due to heating of optics by a laser. FIG. 8 provides a block diagram of elements used in the method of FIG. 7.

In step 700 of FIG. 7, controller 102 receives production instructions 812 that describe the laser processing to be performed on material 124. Based on instructions 812, controller 102 sets an x-y position 813 for the laser beam and a laser power level 804. Controller 102 then instructs laser controller 103 to turn on laser 104 in accordance with production instructions 812.

At step 702, focal plane shift identifier 808 of focal plane shift compensator 802, also referred to as control electronics 802, retrieves focal plane shift parameters 612, including average thermal constant and scaling factor.

At step 704, focal plane shift identifier 808 waits for a focal plane adjustment time to arrive. In accordance with one embodiment, focal plane adjustments are made at fixed intervals such as at a frequency of 50 Hz or once every 0.02 seconds, for example.

When the focal point adjustment time arrives, focal plane shift identifier 808 receives a current laser power level at step 705. Specifically, focal plane shift identifier 808 receives the current measured laser power level from laser meter 800, which measures the power of the laser output by laser 104. The received laser power level is stored in storage electronics that can form part of control electronics 802 or may be separate from control electronics 802.

At step 706, focal plane shift identifier 808 uses the current laser power, a previous weighted sum of past laser powers and the average thermal constant of the retrieved focal plane shift parameters to form a new weighted sum of laser powers. In particular, the average thermal constant is used to weight the previous weighted sum of past laser powers less than the current laser power when forming the new weighted sum of laser powers. The new weighted sum of laser powers is stored in storage electronics (memory) to be used during the next focal plane adjustment time as the previous weighted sum.

At step 707, focal plane shift identifier 808 uses the scaling factor of the retrieved focal plane shift parameters and the new weighted sum of laser powers to determine the expected focal plane shift 811. In accordance with one embodiment, the expected focal plane shift 811 is formed as the product of the scaling factor and the new weighted sum of laser powers. The expected focal plane shift 811 is provided to focus servo controller 150.

At step 708, focus servo controller 150 uses expected focal plane shift 811 and x,y position 813 for the laser beam to determine a servo control signal for focus servo 115. Thus, at step 708, focus servo controller 150 is adjusting the focus to ensure that the focal points at all x,y positions are in a common focal plane and to compensate for expected focal plane shift 811 due to heating of the optics.

At step 710, focus servo controller 150 sends a servo control signal to focus servo 115, which controls the position of servo driven expansion lens 114. Focus servo 115 then moves expansion lens 114, thereby altering at least one feature of the optics based on the expected focal plane shift, so as to maintain the focal point substantially on the piece of working material. At the same time, x-y position controller 152 sends a control signal to galvo servos 816, which move mirrors 120 and 122 to position the laser beam at x,y position 813. At the same time, focus servo controller moves servo-driven lens 114 to ensure that the common focal plane is located substantially at the working material. Thus, while galvo servos 816 are able to direct the laser beam in two dimensions (x,y), focus servo 115 moves servo-driven lens 114 to different positions to change the position of the focal point of the laser beam in a third dimension (z), orthogonal to the x,y dimensions, wherein for different (x,y) positions for the laser beam, the servo-driven lens is moved to different positions so that the position of the focal point of the laser beam in the third dimension (z) is the same for all (x,y) positions.

After step 710, the process returns to step 704 to wait for the next focal plane adjustment time and when the next focal plane adjustment time arrives, steps 705, 706, 707, 708 and 710 are repeated for a new current power level resulting in a new expected focal plane shift 811 and a new focus servo control signal. Thus, focal plane shift compensator 802 continues to provide new expected focal plane shifts 811 at each new focal plane adjustment time to thereby continuously adjust the focal plane to compensate for laser heating of the optics.

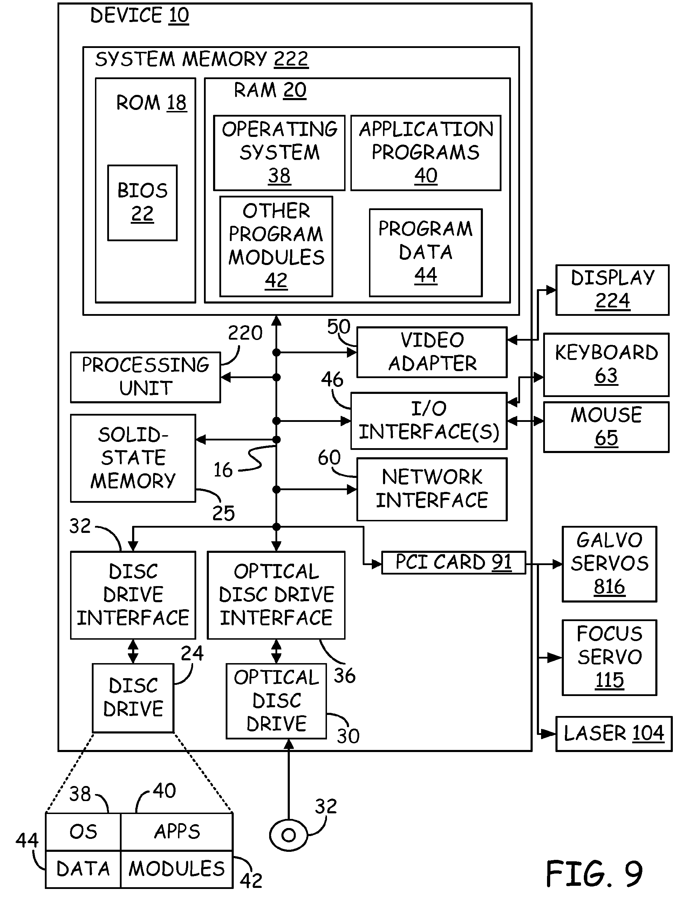

An example of a computing device 10 that can be used to implement test controller 600, timer 604, controller 102, control electronics/focal shift compensator 802, x-y position servo controller 152, focus servo controller 150 and laser controller 103 in the various embodiments is shown in the block diagram of FIG. 9. For example, computing device 10 may be used to perform any of the steps described above in FIGS. 5 and 7.

Computing device 10 of FIG. 9 includes processing unit (processor) 220, system memory 222 and a system bus 16 that couples system memory 222 to processing unit 220. System memory 222 includes read only memory (ROM) 18 and random access memory (RAM) 20. A basic input/output system 22 (BIOS), containing the basic routines that help to transfer information between elements within the computing device 10, is stored in ROM 18.

Embodiments of the present invention can be applied in the context of computer systems other than computing device 10. Other appropriate computer systems include handheld devices, multi-processor systems, various consumer electronic devices, mainframe computers, and the like. Those skilled in the art will also appreciate that embodiments can also be applied within computer systems wherein tasks are performed by remote processing devices that are linked through a communications network (e.g., communication utilizing Internet or web-based software systems). For example, program modules may be located in either local or remote memory storage devices or simultaneously in both local and remote memory storage devices. Similarly, any storage of data associated with embodiments of the present invention may be accomplished utilizing either local or remote storage devices, or simultaneously utilizing both local and remote storage devices.

Computing device 10 further includes a hard disc drive 24, a solid state memory 25, and an optical disc drive 30. Optical disc drive 30 can illustratively be utilized for reading data from (or writing data to) optical media, such as a CD-ROM disc 32. Hard disc drive 24 and optical disc drive 30 are connected to the system bus 16 by a hard disc drive interface 32 and an optical disc drive interface 36, respectively. The drives, solid state memory and external memory devices and their associated computer-readable media provide nonvolatile storage media for computing device 10 on which computer-executable instructions and computer-readable data structures may be stored. Other types of media that are readable by a computer may also be used in the exemplary operation environment.

A number of program modules may be stored in the drives, solid state memory 25 and RAM 20, including an operating system 38, one or more application programs 40, other program modules 42 and program data 44. For example, application programs 40 can include instructions for implementing any of the modules described above such as test controller 600, timer 604, controller 102, curve generator 800, and focal plane shift identifier 808. Program data can include any data used in the steps described above including laser power level 602, time/focal plane shift curves 612, production instructions 812, laser power level 804, laser "on" time 810, time/focal plane shift curve 806, expected focal plane shift 811 and x,y positions 813.

Input devices including a keyboard 63 and a mouse 65 are connected to system bus 16 through an Input/Output interface 46 that is coupled to system bus 16. Display 224 is connected to the system bus 16 through a video adapter 50 and provides graphical images to users. Other peripheral output devices (e.g., speakers or printers) could also be included but have not been illustrated. In accordance with some embodiments, display 224 comprises a touch screen that both displays input and provides locations on the screen where the user is contacting the screen.

Computing device 10 may operate in a network environment utilizing connections to one or more remote computers. The remote computer may be a server, a router, a peer device, or other common network node. The remote computer may include many or all of the features and elements described in relation to computing device 10. The network connections to device 10 can include a local area network (LAN) and a wide area network (WAN), for example. Such network environments are commonplace in the art. Computing device 10 is connected to the LAN through a network interface 60. Computing device 10 is also connected to the WAN 58 through a modem, which may be internal or external.

In a networked environment, program modules depicted relative to computing device 10, or portions thereof, may be stored in the remote memory storage device of a remote computer. For example, application programs may be stored utilizing such remote memory storage devices. In addition, data associated with an application program may illustratively be stored within remote memory storage devices. It will be appreciated that the network connections shown in FIG. 16 are exemplary and other means for establishing a communications link between the computers, such as a wireless interface communications link, may be used.

Device 10 includes a PCI Card 91, which is connected to galvo servos 816, focus servo 115, and laser 104. PCI Card 91 includes a digital signal processor that executes instructions to perform tasks assigned to x-y position servo controller 152, focus servo controller 150 and laser controller 603. In some embodiments, the functions assigned to curve generator 800 and focal plane shift identifier 808 are also executed by the digital signal processor in PCI Card 91. In such embodiments, laser power level 804, laser "on" time 810, time/focal plane shift curves 612, time/focal plane shift curve 806, expected focal plane shift 811 and x,y positions 813 are stored in storage electronics/memory on PCI Card 91. In still further embodiments, controller 102 is implemented by the processor in PCI Card 91 and production instructions are stored in storage electronics/memory on PCI Card 91.

Although elements have been shown or described as separate embodiments above, portions of each embodiment may be combined with all or part of other embodiments described above.

Although the present invention has been described with reference to preferred embodiments, workers skilled in the art will recognize that changes may be made in form and detail without departing from the spirit and scope of the invention.

## Claims

1. A method comprising:
applying a laser beam to optics to focus the laser beam into a focal point substantially on a piece of working material;
determining an expected shift in a focal plane due to heating of the optics by the laser beam; and
altering at least one feature of the optics based on the expected shift so as to maintain the focal point substantially on the piece of working material.

2. The method of claim 1 wherein determining the expected shift in the focal plane due to heating of the optics comprises determining a power level of the laser beam applied to the optics and using the determined power level to determine the expected shift in the focal plane.

3. The method of claim 2 wherein determining the expected shift in the focal plane further comprises determining a weighted sum of a current power level of the laser beam and at least one past power level of the laser beam.

4. The method of claim 3 wherein determining the expected shift in the focal plane further comprises scaling the weighted sum.

5. The method of claim 4 wherein determining the weighted sum comprises using a weighting parameter and scaling the weighted sum comprises using a scaling parameter, wherein the weighting parameter and the scaling parameter are determined by applying laser beams of different power levels to optics and measuring a change in a focal plane height over time for each different power level.

6. The method of claim 1 wherein the steps of determining an expected shift in the focal plane due to heating and altering at least one feature of the optics are repeated at fixed time intervals.

7. The method of claim 1 wherein altering at least one feature of the optics comprises shifting a position of a lens in the optics.

8. The method of claim 7 wherein the optics comprise a galvo that is able to direct the laser beam in two dimensions (x,y) and a servo-driven lens that can be moved to different positions to change the position of the focal point of the laser beam in a third dimension (z), wherein for different (x,y) positions for the laser beam, the servo-driven lens is moved to different positions so that the position of the focal point of the laser beam in the third dimension (z) is the same for all (x,y) positions.

9. An apparatus comprising:
a laser producing a laser beam during operation;
an optics servo capable of moving at least one optical element that the laser beam is incident upon during operation;
a controller that causes the optics servo to move the at least one optical element to compensate for a change in a focal point due to heat generated by the laser beam during operation.

10. The apparatus of claim 9 wherein the change in focal point comprises a change in a position of the focal point.

11. The apparatus of claim 10 further comprising a galvo that can direct the laser along two dimensions and wherein the optics servo can alter the location of the focal point along a third dimension orthogonal to the two dimensions.

12. The apparatus of claim 9 wherein the controller causes the optics servo to move by determining an expected change in the focal point given a power value for the laser beam.

13. The apparatus of claim 12 wherein determining the expected change further comprises using at least one power value of the laser beam at a previous point in time.

14. The apparatus of claim 13 wherein determining the expected change further comprises forming a weighted sum of a current power level for the laser beam and at least one power level of the laser beam at a previous point in time and using the weighted sum to determine the expected change.

15. A controller for a laser-based manufacturing device, the controller comprising:
storage electronics that receive and store a power level of a laser beam;
control electronics that use the stored power level of the laser beam to set a servo control signal such that when the servo control signal is provided to an optics servo the servo control signal causes the optics servo to move an optics element to compensate for a change in a focal point of the laser beam due to heating.

16. The controller of claim 15 wherein the change in the focal point of the laser is due to heating of optics caused by the laser.

17. The controller of claim 15 wherein the control electronics set the servo control signal based in part on a weighted sum of the stored power level and at least one previous power level of the laser beam.

18. The controller of claim 16 wherein the control electronics set the servo control signal by scaling the weighted sum.

19. The controller of claim 15 wherein the optics element is part of an optics system that includes a galvo that positions the laser in an x-y plane.

20. The controller of claim 19 wherein the control electronics further change the focal point based on an x-y position of the laser in the x-y plane.
